# EUROPÄISCHE PATENTSCHRIFT

(11) **EP 1 990 254 B1**
(45) Veröffentlichungstag und Bekanntmachung des Hinweises auf die Patenterteilung: **05.01.2011**
(21) Anmeldenummer: 08153507.2
(22) Anmeldetag: 28.03.2008
(51) Int. Cl.: B62D 5/04

(54) **Betriebsverfahren für ein Fahrzeug-Lenksystem mit einem Elektromotor**
Method for operating an automobile steering system with an electric motor
Procédé de fonctionnement pour un système de direction d'un véhicule doté d'un moteur électrique

(30) Priorität: 11.05.2007 DE 102007022178
(43) Veröffentlichungstag der Anmeldung: 12.11.2008
(73) Patentinhaber: Bayerische Motoren Werke Aktiengesellschaft, 80809 München (DE)
(72) Erfinder: Wolff, Robert, 84189, Wurmsham (DE); Schillitz, Xaver, 80939, München (DE)

(56) Entgegenhaltungen:
- EP-A- 1 502 838
- JP-A- 2002 160 655
- US-A- 5 076 381
- US-A- 6 102 151
- US-A- 6 154 696

## Beschreibung

Die Erfindung betrifft ein Betriebsverfahren für ein Fahrzeug-Lenksystem mit Momenten-Unterstützung durch einen Elektromotor, wobei die Rücklaufgeschwindigkeit des Lenkrads ausgehend von einem eingeschlagenen Zustand der lenkbaren und angetriebenen Räder in deren Neutralstellung durch geeignete Ansteuerung des Elektromotors in Abhängigkeit von verschiedenen Randbedingungen einstellbar ist. Ein Betriebsverfahren dieser Art ist aus der US 5 076 381 bekannt. Zum bekannten Stand der Technik wird auch neben der DE 102 35 039 A1 auf die DE 3908 218 C2 verwiesen.

Fahrzeug-Lenksysteme mit elektromotorischer Momenten-Unterstützung, bei denen also das in die Lenkanlage eingeleitete sog. Servomoment von einem Elektromotor erzeugt wird, haben sich zwar grundsätzlich bewährt, können jedoch hinsichtlich des dem Fahrer des Fahrzeugs über sein Lenkrad übermittelten Lenkgefühls noch nicht vollständig an die herkömmlichen Lenksysteme mit hydraulischer Lenkunterstützung heranreichen. Dabei sind grundsätzlich bereits viele Parameter bekannt, welche einer Vielzahl von Randbedingungen entsprechend eingestellt werden können, um ein befriedigendes Lenkverhalten und Lenkgefühl zu erzielen. Einer dieser einstellbaren Parameter ist die Rücklaufgeschwindigkeit des Lenkrads aus einer eingeschlagenen Position in die Neutralstellung, bzw. das damit verbundene sog. Rückholdrehmoment; vgl. hierzu die eingangs zweitgenannte Schrift.

Weiterhin wurde bereits versucht, an einem Kraftfahrzeug, dessen lenkbare Vorder-Räder angetrieben sind, Störeinflüsse, die aus der Übertragung der Antriebskraft von den lenkbaren Rädern auf die Fahrbahn resultieren, zu eliminieren oder zumindest zu reduzieren, indem der auf diesen Störeinflüssen ermittelte Störmomentenanteil ermittelt und durch geeignete Ansteuerung des Lenkmoment-Unterstützungs-Elektromotors am Lenkrad ein störkraftgemindertes, insbesondere störkrafteinflussfreies Lenkmoment erzeugt wird; vgl. die eingangs erstgenannte DE 102 35 039 A1.

Letzteres ist jedoch äußerst aufwändig und führt dabei oftmals nicht zum gewünschten Ergebnis, weshalb ein verbessertes Betriebsverfahren für ein Fzg.-Lenksystem nach dem Oberbegriff des Anspruchs 1 aufgezeigt werden soll, mit Hilfe dessen Störeinflüsse aus der Zugkraft-Übertragung der lenkbaren Räder reduziert werden können (= Aufgabe der vorliegenden Erfindung).
Die Lösung dieser Aufgabe ist gemäß Anspruch 1 dadurch gekennzeichnet, dass die an den lenkbaren Rädern übertragene Zugkraft oder eine dieser im wesentlichen entsprechende Ersatzgröße eine solche Randbedingung, anhand derer die besagte Rücklaufgeschwindigkeit einstellbar ist, ist.

Vorgeschlagen ist somit, die Rücklaufgeschwindigkeit des Lenkrads, die an gängigen Lenksystemen mit elektromotorischer Momentenunterstützung als von Randbedingungen abhängig applizierbar ist, von der an den lenkbaren und angetriebenen Rädern auf die Fahrbahn übertragenen Zugkraft abhängig zu gestalten. Dabei wurde erkannt, dass es nicht erforderlich ist, ein Störmoment welches aus der Zugkraft-Übertragung resultiert, explizit und in aufwändiger Weise zu ermitteln und daraus ein Kompensationsmoment zu ermitteln, welches dann derart vom elektrischen Servomotor gestellt wird, dass diese Störeinflüsse am Lenkrad nicht spürbar sind, sondern dass einfach die genannte Rücklaufgeschwindigkeit geeignet in Abhängigkeit von der übertragenen Zugkraft einzustellen ist, um praktisch den gleichen Effekt zu erzielen.

Diese geeignete Abhängigkeit kann der Einfachheit halber über ein(e) empirisch ermittelte(s) Kennlinie oder Kennfeld festgelegt sein, d.h. in einfachen Versuchsreihen kann ermittelt werden, wie die Abhängigkeit konkret festzulegen ist, um eine bestmögliche Freiheit von Störeinflüssen aus der an den lenkbaren Rädern übertragenen Zugkraft zu erzielen. Dabei kann die übertragene Zugkraft messtechnisch ermittelt werden. Vorzugsweise handelt es sich beim angetriebenen Fahrzeug um ein Kraftfahrzeug mit Frontantrieb, so dass jedenfalls dann, wenn kein sog. mü-split-Zustand vorliegt, von einer theoretischen Gleichverteilung des vom Fzg.-Antriebsaggregat abgegebenen Antriebsmomentes auf die angetriebenen (und lenkbaren) Vorder-Räder ausgegangen werden kann, wobei weiterhin Drehzahlunterschiede zwischen den beiden Rädern der Vorderachse aufgrund eines Lenk-Einschlags einfach entsprechende Berücksichtigung finden können. Somit kann also das grundsätzlich bekannte, vom Fzg.-Antriebsaggregat abgegebene Antriebsmoment unter Berücksichtigung der Drehzahl des jeweiligen Rades über das daraus ermittelbare Drehmoment am jeweiligen Fzg.-Rad eine geeignete Ersatzgröße für die an diesem Rad übertragene Zugkraft bilden.

Weiterhin wurde festgestellt, dass es im Hinblick auf eine Minimierung des für die Applikation zu betreibenden Aufwands ausreichend ist, wenn die Rücklaufgeschwindigkeit des Lenkrads nur oberhalb von Fahrgeschwindigkeiten des Fahrzeugs in der Größenordnung von 20 km/h von der an den angetriebenen lenkbaren Rädern übertragenen Zugkraft abhängig ist. Im übrigen können weitere Randbedingungen, von denen die Rücklaufgeschwindigkeit des Lenkrads abhängig ist, der jeweilige Lenkwinkel und/oder die Fahrgeschwindigkeit des Fahrzeugs und/oder das vom Fahrer am Lenkrad angelegte Handmoment sein, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Betriebsverfahren für ein Fahrzeug-Lenksystem mit Momenten-Unterstützung durch einen Elektromotor, wobei die Rücklaufgeschwindigkeit des Lenkrads ausgehend von einem eingeschlagenen Zustand der lenkbaren und angetriebenen Räder in deren Neutralstellung durch geeignete Ansteuerung des Elektromotor in Abhängigkeit von verschiedenen Randbedingungen einstellbar ist,
**dadurch gekennzeichnet, dass** die an den lenkbaren Rädern übertragene Zugkraft oder eine dieser im wesentlichen entsprechende Ersatzgröße eine solche Randbedingung ist.

2. Betriebsverfahren nach Anspruch 1,
**dadurch gekennzeichnet, dass** die Abhängigkeit der Rücklaufgeschwindigkeit über ein(e) empirisch ermittelte(s) Kennlinie oder Kennfeld festgelegt ist

3. Betriebsverfahren nach Anspruch 1 oder 2,
**dadurch gekennzeichnet, dass** die Rücklaufgeschwindigkeit des Lenkrads nur oberhalb von Fahrgeschwindigkeiten des Fahrzeugs in der Größenordnung von 20 km/h von der an den angetriebenen lenkbaren Rädern übertragenen Zugkraft abhängig ist.

4. Betriebsverfahren nach einem der vorangegangen Ansprüche
**dadurch gekennzeichnet, dass** die Rücklaufgeschwindigkeit des Lenkrads weiterhin vom Lenkwinkel und/oder von der Fahrgeschwindigkeit des Fahrzeugs und/oder vom vom Fahrer am Lenkrad angelegten Handmoment abhängig ist.

## Claims

1. An operating method for a vehicle steering system with torque assistance from an electric motor, the return speed of the steering wheel, starting from a turned state of the steerable and driven wheels to the neutral position thereof, being adjustable by suitable activation of the electric motor as a function of various boundary conditions, **characterised in that** the traction transmitted to the steerable wheels or a replacement variable substantially corresponding thereto is a boundary condition of this type.

2. An operating method according to claim 1, **characterised in that** the dependency of the return speed is fixed by an empirically determined characteristic or characteristic map.

3. An operating method according to claim 1 or 2, **characterised in that** the return speed of the steering wheel only depends on the traction transmitted to the driven steerable wheels above travelling speeds of the vehicle in the order of magnitude of 20 km/h.

4. An operating method according to any one of the preceding claims, **characterised in that** the return speed of the steering wheel furthermore depends on the steering angle and/or on the travelling speed of the vehicle and/or on the manual torque applied by the driver to the steering wheel.

## Revendications

1. Procédé de gestion d'un système de direction de véhicule comportant une assistance de couple par un moteur électrique,
la vitesse de retour du volant à partir de la position braquée des roues directrices et motrices vers la position neutre se faisant par une commande appropriée du moteur électrique en fonction de différentes conditions aux limites,
procédé **caractérisé en ce que**
la force de traction transmise par les roues directrices ou une grandeur équivalente essentiellement correspondante est une telle condition aux limites.

2. Procédé de gestion selon la revendication 1,
**caractérisé en ce que**
la dépendance de la vitesse de retour est fixée par une courbe caractéristique ou un champ de courbes caractéristiques déterminées par des moyens empiriques.

3. Procédé de gestion selon la revendication 1 ou 2,
**caractérisé en ce que**
la vitesse de retour du volant ne dépend de la force de traction transmise par les roues directrices, motrices, que pour une vitesse du véhicule supérieure à environ 20 km/h.

4. Procédé de gestion selon l'une des revendications précédentes,
**caractérisé en ce que**
la vitesse de retour du volant dépend en outre de l'angle de braquage et/ou de la vitesse de déplacement du véhicule et/ou du couple que le conducteur applique au volant avec ses mains.
